(19) Europäisches Patentamt
European Patent Office
Office européen des brevets

(11) Publication number: **0 073 566**
**A1**

# (12) EUROPEAN PATENT APPLICATION

(21) Application number: **82303805.4**

(22) Date of filing: **20.07.82**

(51) Int. Cl.³: **A 01 N 53/00,** A 01 N 25/12, A 01 N 25/26, C 07 C 69/743

(30) Priority: **27.08.81 GB 8126197**

(43) Date of publication of application: **09.03.83 Bulletin 83/10**

(84) Designated Contracting States: **BE CH DE FR GB IT LI NL**

(71) Applicant: **IMPERIAL CHEMICAL INDUSTRIES PLC, Imperial Chemical House Millbank, London SW1P 3JF (GB)**

(72) Inventor: **Crowley, Patrick Jelf, 56 Ellis Road, Crowthorne Berkshire (GB)**
Inventor: **Punja, Nazim, 24 Wiltshire Avenue, Crowthorne Berkshire (GB)**
Inventor: **Turnbull, Michael Drysdale, 19 Sombarton Gardens, Lower Earley Reading Berkshire (GB)**

(74) Representative: **Bishop, Nigel Douglas et al, Imperial Chemical Industries PLC Legal Department: Patents Thames House North Millbank, London SW1P 4QG (GB)**

## (54) Methods and compositions for combating soil pests.

(57) Soil-dwelling insect pests are combated and controlled by application to the soil of a composition, preferably a granular composition, comprising a compound of formula:

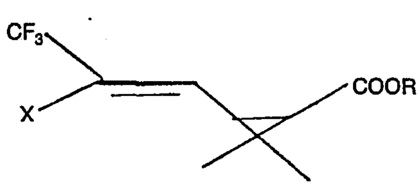

wherein X is F, Cl or Br and R is a benzyl group optionally substituted with 1–3 substituents selected from Cl, Br, I, alkyl, alkenyl and alkoxy.

EP 0 073 566 A1

PP 31975/EP
0073566

# METHODS AND COMPOSITIONS FOR COMBATING SOIL PESTS

This invention relates to a method of combating soil-dwelling insect pests and compositions for use in performing the method.

European Patent Application No.0003336 discloses a broad class of cyclopropane esters useful as insecticides. The patent application contains little information on how the esters are to be applied as insecticides but it is known in the art that cyclopropane esters of this general type are effective agents for combating pests which feed on crop foliage and are usually applied in the form of liquid sprayable compositions for this purpose. There is no suggestion in European Patent Application No. 0003336 that any of the esters would be expected to combat insect pests which inhabit the soil.

We have now discovered that a group of compounds some but not all of which fall within the broad disclosure of European Patent Application No. 0003336 have extremely useful and unexpected properties as insecticides for use in the control of economically important insect and like pests inhabiting the soil, e.g. larval coleopterous pests such as root worms of the genus Diabrotica, and larval lepidopterous pests such as cutworms of the genus Agrotis.

Accordingly the present invention provides a method of combating insect pests at a stage when they inhabit the soil which consists of applying to the soil an insecticidally effective amount of a composition comprising as an active ingredient a compound of formula:-

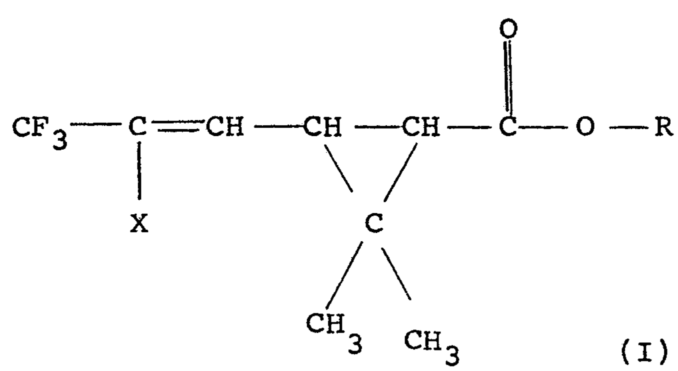

(I)

wherein R is a benzyl group optionally substituted in the phenyl ring with up to three substituents each of which may be selected from chloro, bromo, iodo, alkyl of up to four carbon atoms, alkenyl of up to six carbon atoms and alkoxy of up to four carbon atoms.

Examples of particular compounds according to formula I include those set out in the Table I which indicates the meaning of X and R for each compound and its isomeric composition. It will be appreciated that compounds of formula I are capable of existing in several geometrically distinct isomeric forms depending on the relative dispositions of the alkenyl and carboxylate functions on the cyclopropane ring and of and X-substituent and hydrogen atom on the alkenyl group.

TABLE I

| COMPOUND NO | X | R | ISOMERIC COMPOSITION |
|---|---|---|---|
| 1 | Cl | 4-methoxybenzyl | (±)-cis |
| 2 | Cl | 4-methylbenzyl | (±)-cis |
| 3 | Cl | 2,4,6-trimethylbenzyl | (±)-cis |
| 4 | Cl | benzyl | (±)-cis |
| 5 | Cl | 4-allylbenzyl | (±)-cis |
| 6 | Cl | 4-allyloxybenzyl | (±)-Z-cis |
| 7 | Cl | 3-allyloxybenzyl | (±)-Z-cis |
| 8 | Cl | 2-methoxybenzyl | (±)-Z-cis |
| 9 | F | 2-methylbenzyl | (±)-Z-cis |
| 10 | F | 2-methylbenzyl | (±)-Z-trans |
| 11 | F | benzyl | (±)-Z-cis |
| 12 | F | benzyl | (±)-Z-trans |
| 13 | Cl | 2,6-dimethylbenzyl | (±)-Z-cis |
| 14 | Cl | 3-methoxybenzyl | (±)-Z-cis |
| 15 | Cl | 2-methylbenzyl | (±)-Z-cis |
| 16 | F | 2,6-dimethylbenzyl | |
| 17 | Cl | 2-chloro-6-methoxybenzyl | (±)-Z-cis |
| 18 | Cl | 2-chloro-6-methylbenzyl | |
| 19 | Cl | 4-chloro-2-methylbenzyl | (±)-Z-cis |
| 20 | Cl | 3-bromobenzyl | (±)-Z-cis |
| 21 | Cl | 4-bromobenzyl | (±)-Z-cis |
| 22 | Cl | 2-iodobenzyl | (±)-Z-cis |
| 23 | F | 2-bromobenzyl | (±)-Z-trans |
| 24 | F | 2-bromobenzyl | (±)-Z-cis |
| 25 | F | 2,4-dichlorobenzyl | (±)-Z-trans |
| 26 | F | 2,4-dichlorobenzyl | (±)-Z-cis |

TABLE I CONTINUED

| COMPOUND NO | X | R | ISOMERIC COMPOSITION |
|---|---|---|---|
| 27 | F | 2,6-dibromobenzyl | (±)-Z-cis |
| 28 | F | 2,6-dibromobenzyl | (±)-Z-trans |
| 29 | Cl | 2,3,6-trichlorobenzyl | |
| 30 | Cl | 2,4-dichlorobenzyl | (±)-Z-cis |
| 31 | Cl | 2-chlorobenzyl | (±)-Z-cis |
| 32 | Cl | 3-chlorobenzyl | (±)-Z-cis |
| 33 | Cl | 2,5-dichlorobenzyl | (±)-Z-cis |
| 34 | Cl | 3,4-dichlorobenzyl | (±)-Z-cis |
| 35 | Cl | 2-bromobenzyl | (±)-Z-cis |
| 36 | Cl | 2,6-dichlorobenzyl | (±)-Z-cis |
| 37 | F | 2-chlorobenzyl | (±)-Z-cis |
| 38 | Cl | 2-chlorobenzyl | (±)-Z-trans |
| 39 | F | 2,6-dichlorobenzyl | (±)-Z-trans |
| 40 | F | 2,6-dichlorobenzyl | (±)-Z-cis |
| 41 | Cl | 2,6-dibromobenzyl | (±)-Z-cis |
| 42 | Cl | 2,4-dichlorobenzyl | (±)-Z-cis |
| 43 | Cl | 2,4-dichlorobenzyl | (±)-Z-trans |
| 44 | Cl | 3-iodobenzyl | (±)-Z-cis |
| 45 | Cl | 2-chloro-4-iodobenzyl | (±)-Z-cis |
| 46 | F | 2-chloro-4-iodobenzyl | (±)-Z-cis |
| 47 | Cl | 4-iodobenzyl | (±)-Z-cis |
| 48 | Cl | 3,5-dichlorobenzyl | (±)-Z-cis |
| 49 | Cl | 2-ethylbenzyl | (±)-Z-cis |
| 50 | Cl | 2,5-dimethylbenzyl | (±)-Z-cis |
| 51 | Cl | 3,4-dimethylbenzyl | (±)-Z-cis |
| 52 | Cl | 3,5-dimethylbenzyl | (±)-Z-cis |

TABLE I CONTINUED

| COMPOUND NO | X | R | ISOMERIC COMPOSITION |
|---|---|---|---|
| 53 | Cl | 2-methyl-4-methoxybenzyl | |
| 54 | Cl | 4-allyl-2-methylbenzyl | (±)-Z-cis |
| 55 | F | 4-allyl-2-methylbenzyl | (±)-Z-cis |
| 56 | Cl | 4-allyl-2,6-dimethylbenzyl | (±)-Z-cis |
| 57 | Cl | 2,6-diethylbenzyl | |
| 58 | Cl | 4-bromo-2-methylbenzyl | (±)-Z-cis |
| 59 | Cl | 2,4,6-trichlorobenzyl | |
| 60 | F | 2,5-dichlorobenzyl | (±)-Z-trans |
| 61 | F | 2,5-dichlorobenzyl | (±)-Z-cis |
| 62 | F | 2,5-dimethylbenzyl | (±)-Z-cis |
| 63 | Cl | 4-chlorobenzyl | (±)-Z-cis |

Amongst the compounds of Table I compounds nos. 9, 13 and 16 may be particularly preferred for use in the method of the invention.

The compounds may be prepared by methods well known in the art for the preparation of esters. Thus for example an appropriately substituted cyclopropane carboxylic acid in the form of a salt thereof may be reacted with the appropriate benzyl halide, or a carboxylic acid chloride may be reacted with the corresponding benzyl alcohol. Analogous procedures are set forth in for example U.K. patent application no. 2034700A and US Patent 4183948 the disclosures of which are herein incorporated by reference.

Although the method of the invention may be practised by applying liquid compositions containing the active ingredient of formula I above to the soil, solid compositions are more usually employed for this type of application. These are preferably formulated as granules in which the insecticidally active esters are supported on mineral, e.g. attapulgite, pumice or gypsum, granules, or granules of vegetable matter e.g. those derived from corn cobs. They are applied to soil at rates of 5 to 25 kg/ha, and preferably at rates of 5 to 15 kg/ha. Because the compounds used in the method of the invention have high intrinsic activity against the pests and are also capable of exterting this activity over a prolonged period only one application is required in the course of a growing season to give effective control. The granules may contain from 0.25 to 5.0% and preferably 0.5 to 2.5% by weight of the active ingredient, and the stability of the granules may be improved and the rate of release of the active ingredient may be regulated by the incorporation of a resin eg. wood rosin or coating with a polymeric substance e.g. a polyvinyl alcohol based material. The formulated granules may be obtained by spraying the granular support with a solution of the active ingredient containing (if required) the resin in a readily volatilised solvent eg. methylene chloride, so that the solution is absorbed by the granules and thereafter drying the granules to volatilise the solvent.

The granules may be applied to the surface of the soil adjacent to the furrow in which the plants are growing, and may be lightly incorporated in the soil thereafter, or the granules may be placed in the furrows with the seed at the time of planting. In a further aspect therefore the present invention provides a granular composition comprising a compound of formula for use in performing the method of the invention.

The following Examples illustrate the invention.

## EXAMPLE 1

Preparation of 2-methylbenzyl (±)-cis-3-(Z-2-chloro-3,3,3-trifluoroprop-1-en-1-yl)-2,2-dimethylcyclopropane carboxylate (compound no.15, Table I).

A mixture of (±)-cis-3-(Z-2-chloro-3,3,3-trifluoroprop-1-en-1-yl)-2,2-dimethylcyclopropane carboxylic acid (1.20 g), anhydrous potassium carbonate (2.0 g), 2-methylbenzyl bromide (0.95 g), and dry acetone (30 ml) was stirred for a period of 2 hours at the ambient temperature (ca 25°C) and kept at that temperature for a further 18 hours. After diluting the mixture with diethyl ether (300 ml) the resultant mixture was washed with dilute aqueous sodium carbonate solution and dried over anhydrous magnesium sulphate. The solvents were evaporated and the residual oil purified by preparative thick layer chromatography using silica gel plates and chloroform eluent, to give 2-methylbenzyl (±)-cis-3-(Z-2-chloro-3,3,3-trifluoroprop-1-en-1-yl)-2,2-dimethylcyclopropane carboxylate (1.05 g) as a colourless oil.

N.m.r. ($CDCl_3$)$\delta$ : 2.60-2.80 (m,4H); 3.05 (d,1H); 4.87 (s,2H); 7.66 (s,3H); 7.70-8.04 (m,2H); 8.70 (s,6H)

Infra red (liquid film): 1715 $cm^{-1}$

0073566

EXAMPLE 2

The other compounds set forth in Table I were prepared by methods analogous to that set out in Example 1 from the appropriate benzyl bromides and cyclopropane carboxylic acids. All the products gave infra red and n.m.r. spectral data consistent with the assigned structures, as follows :

2-Bromobenzyl (±)-trans-3-(Z-2,3,3,3-tetrafluoroprop-1-en-1-yl)-2,2-dimethylcyclopropane carboxylate (Compound no.23, Table I)

N.m.r. ($CDCl_3$)δ : 1.22 (s,3H); 1.32 (s,3H); 1.76 (d,1H); 2.28-2.48 (m,1H); 5.20 (s,2H); 5.28 (q,1H) 7.08-7.64 (m,4H).
Infra red (liquid film): 1720 $cm^{-1}$

2,5-Dichlorobenzyl (±)-trans-3-(Z-2,3,3,3-tetrafluoroprop-1-en-1-yl)-2,2-dimethylcyclopropane carboxylate (Compound no.60, Table I). Pale yellow oil.

N.m.r.($CDCl_3$)δ: 1.24 (s,3H); 1.34 (s,3H); 1.60-1.98 (m,1H); 1.38 (q,1H); 5.20 (s,2H); 5.30 (q,1H); 7.10-7.50 (m,3H).
Infra red (liquid film) : 1725 $cm^{-1}$

2,6-Dibromobenzyl (±)-cis-3-(Z-2,3,3,3-tetrafluoroprop-1-en-1-yl)-2,2-dimethylcyclopropane carboxylate (Compound no.27, Table I). Colourless oil.

N.m.r.($CDCl_3$)δ: 1.28 (d,6H); 1.88-2.40 (m,2H); 5.42 (d,2H); 6.12 (q,1H); 7.10 (q,1H); 7.52 (s,1H); 7.60 (s,1H).
Infra red (liquid film) : 1720 $cm^{-1}$

2-Chlorobenzyl (±)-cis-3-(2,3,3,3-tetrafluoroprop-1-en-

1-yl)-2,2-dimethylcyclopropane carboxylate (Compound no.37, Table I). Colourless oil.

N.m.r. ($CDCl_3$)$\delta$ : 1.25 (s,6H); 1.90-2.25 (m,2H); 5.24 (s,2H) 6.10 (q,1H); 7.20-7.50 (m,4H).
Infra red (liquid film) : 1720, 1590, 1130 $cm^{-1}$

2,6-Dichlorobenzyl ($\pm$)-cis-3-(Z-2,3,3,3-tetrafluoroprop-1-en-1-yl)-2,2-dimethylcyclopropane carboxylate (Compound no.40, Table I). Colourless oil.

N.m.r.($CDCl_3$)$\delta$: 1,25,1.39 (d,6H); 1.82-2.30 (m,2H); 5.42 (d,2H); 6.10 (q,1H); 7.10-7.50 (m,3H)
Infra red (liquid film) : 3090, 1725, 1580, 1560, 1130 $cm^{-1}$

2-Bromobenzyl ($\pm$)-cis-3-(Z-2,3,3,3-tetrafluoroprop-1-en-1-yl)-2,2-dimethylcyclopropane carboxylate (compound no.24, Table I).

N.m.r.($CDCl_3$)$\delta$: 1.28 (s,6H); 1.92-2.28 (m,2H); 5.19 (s,2H); 6.08 (q,1H); 7.08-7.62 (m,4H)
Infra red (liquid film) : 1725 $cm^{-1}$

2,5-Dichlorobenzyl ($\pm$)-cis-3-(Z-2,3,3,3-tetrafluoroprop-1-en-1-yl)-2,2-dimethylcyclopropane carboxylate (compound no.61, Table I). Pale yellow oil.

N.m.r.($CDCl_3$)$\delta$: 1.30 (s,6H); 1.84-2.34 (m,2H); 5.16 (s,2H); 6.08 (q,1H); 7.08-7.50 (m,3H).
Infra red (liquid film) : 1725 $cm^{-1}$

2,6-Dibromobenzyl ($\pm$)-trans-3-(Z-2,3,3,3-tetrafluoroprop-1-en-1-yl)-2,2-dimethylcyclopropane carboxylate (Compound no.28, Table I). Colourless oil.

N.m.r. ($CDCl_3$)$\delta$ : 1.20 (s,3H); 1.32 (s,3H); 1.50-1.90 (m,1H); 2.38 (q,1H); 5.30 (q,1H); 5.46 (s,2H); 7.10 (q,1H); 7.54 (s,1H); 7.62 (s,1H).

Infra red (liquid film): 1720 $cm^{-1}$

2,6-Dichlorobenzyl ($\pm$)-trans-3-(Z-2,3,3,3-tetrafluoroprop-1-en-1-yl)-2,2-dimethylcyclopropane carboxylate (Compound no.39, Table I). Colourless oil.

N.m.r.($CDCl_3$)$\delta$ : 1.20 (s,3H); 1.30 (s,3H); 1.70 (d,1H); 2.33 (m,1H); 5.26 (q,1H); 5.43 (s,2H); 7.20-7.50 (m,3H).

Infra red (liquid film): 1725, 1580, 1560, 1160, 1140 $cm^{-1}$

2-Chlorobenzyl ($\pm$)-trans-3-(Z-2,3,3,3-tetrafluoroprop-1-en-1-yl)-2,2-dimethylcyclopropane carboxylate (compound no.38, Table I). Oil.

N.m.r.($CDCl_3$)$\delta$ : 1.23 (s,3H); 1.31 (s,3H); 1.75 (d,1H); 2.40 (q,1H); 5.28 (s,2H); 5.30 (q,1H); 7.20-7.60 (m,4H).

Infra red (liquid film): 1720, 1590, 1160, 1130 $cm^{-1}$

2,4-Dichlorobenzyl ($\pm$)-cis-3-(Z-2,3,3,3-tetrafluoroprop-1-en-1-yl)-2,2-dimethylcyclopropane carboxylate (compound no.26, Table I). Colourless oil.

N.m.r.($CDCl_3$)$\delta$: 1.30 (s,6H); 1.90-2.30 (m,2H); 5.30 (s,2H) 6.10 (q,1H); 7.20-7.50 (m,3H).

Infra red (liquid film): 3090, 1725, 1590, 1560, 1130 $cm^{-1}$

2,4-Dichlorobenzyl ($\pm$)-trans-3-(Z-2,3,3,3-tetrafluoroprop-1-en-1-yl)-2,2-dimethylcyclopropane carboxylate (Compound no.25, Table I). Colourless oil.

0073566

N.m.r.($CDCl_3$) $\delta$ : 1.20 (s,3H); 1.25 (s,3H); 1.75 (d,1H); 2.35 (m,1H) 5.20 (q,1H); 7.20-7.50 (m,3H)

4-Iodobenzyl ($\pm$)-cis-3-(Z-2-chloro-3,3,3-trifluoroprop-1-en-1-yl)-2,2-dimethylcyclopropane carboxylate (Compound No.47, Table I).

N.m.r.($CDCl_3$) $\delta$ : 1.30 (s,6H); 1.94-2.30 (m,2H); 5.08 (s,2H); 6.96 (d,1H); 7.14 (d,2H); 7.74 (d,2H).
Infra red (liquid film): 1720 $cm^{-1}$

2-Chloro-4-iodobenzyl ($\pm$)-cis-3-(Z-2-chloro-3,3,3-trifluoroprop-1-en-1-yl)-2,2-dimethylcyclopropane carboxylate (Compound No.46, Table I). Colourless oil.

N.m.r.($CDCl_3$) $\delta$ : 1.30 (s,6H); 1.92-2.40 (m,2H); 5.20 (s,2H); 7.0 (d,1H); 7.20 (d,1H); 7.54-7.92 (m,2H).
Infra red (liquid film): 1715 $cm^{-1}$

3-Iodobenzyl ($\pm$)-cis-3-(Z-2-chloro-3,3,3-trifluoroprop-1-en-1-yl)-2,2-dimethylcyclopropane carboxylate (Compound No.44, Table I).

N.m.r.($CDCl_3$) $\delta$ : 1.30 (s,6H); 1.98-2.30 (m,2H); 5.06 (s,2H); 6.95 (d,1H); 7.02-7.40 (m,2H); 7.60-7.80 (m,2H).
Infra red (liquid film): 1720 $cm^{-1}$

2-Iodobenzyl ($\pm$)-cis-3-(Z-2-chloro-3,3,3-trifluoroprop-1-en-1-yl)-2,2-dimethylcyclopropane carboxylate (Compound no.22, Table I).

N.m.r.($CDCl_3$) $\delta$ : 1.32 (s,6H); 1.96-2.34 (m,2H); 5.12 (s,2H); 6.90-7.46 (m,4H); 7.90 (d,1H)
Infra red (liquid film): 1720 $cm^{-1}$

2-Chloro-4-iodobenzyl (±)-cis-3-(Z-2,3,3,3-tetrafluoroprop-1-en-1-yl)-2,2-dimethylcyclopropane carboxylate (Compound no.46, Table I). M.p. 38-40°.

N.m.r.($CDCl_3$) δ : 1.30 (s,6H0; 1.90-2.36 (m,2H); 5.20 (s,2H); 6.15 (q,1H); 7.16 (d,1H); 7.52-7.86 (m,2H).
Infra red (liquid film): 1715 $cm^{-1}$

2-Methylbenzyl (±)-cis-3-(Z-2,3,3,3-tetrafluoroprop-1-en-1-yl)-2,2-dimethylcyclopropane carboxylate (Compound no.9, Table I). Pale yellow oil.

N.m.r.($CDCl_3$) δ : 1.28 (s,6H); 1.80-2.40d(m,2H); 2.32 (s,3H); 5.12 (s,2H); 6.12 (q,1H); 7.06-7.50 (m,4H).
Infra red (liquid film) : 1720 $cm^{-1}$

2-Methylbenzyl (±)-trans-3-(Z-2,3,3,3-tetrafluoroprop-1-en-1-yl)-2,2-dimethylcyclopropane carboxylate (Compound no.10, Table I). Pale yellow oil.

N.m.r.($CDCl_3$) δ : 1.18 (s,3H); 1.28 (s,3H); 1.50-1.80 (m,1H); 2.10-2.50 (m,4H); 5.14 (s,2H); 5.24 (q,1H); 7.0-7.50 (m,4H).
Infra red (liquid film): 1720 $cm^{-1}$

Benzyl (±)-cis-3-(Z-2,3,3,3-tetrafluoroprop-1-en-1-yl)-2,2-dimethylcyclopropane carboxylate (Compound no.11, Table I). Colourless oil.

N.m.r.($CDCl_3$) δ : 1.26 (d,6H); 1.88-2.30 (m,2H); 5.14 (s,2H); 6.18 (q,1H); 7.38 (s,5H).
Infra red (liquid film): 1720 $cm^{-1}$

Benzyl (±)-trans-3-(Z-2,3,3,3-tetrafluoroprop-1-en-1-yl)-2,2-dimethylcyclopropane carboxylate (Compound no.12, Table I). Colourless oil.

N.m.r.($CDCl_3$) δ : 1.18 (s,3H); 1.30 (s,3H); 1.60-1.90 (m,1H); 2.36 (q,1H); 5.16 (s,2H); 5.30 (q,1H); 7.10-7.70 (m,5H).

Infra red (liquid film): 1720 $cm^{-1}$

2,5-Dimethylbenzyl (±)-cis-3-(Z-2,3,3,3-tetrafluoroprop-1-en-1-yl)-2,2-dimethylcyclopropane carboxylate (Compound No. 62 Table I). Colourless oil.

N.m.r. ($CDCl_3$) δ : 1.30,1.35 (d,6H); 1.90-2.30 (m,2H); 2.50 (s,6H); 5.48 (d,2H); 6.4 (q,1H); 7.3-7.6 (m,3H).

Infra red (liquid film): 1720, 1590, 1200, 1135 $cm^{-1}$

4-Bromobenzyl (±)-cis-3-(2-chloro-3,3,3-trifluoroprop-1-en-1-yl)-2,2-dimethylcyclopropane carboxylate (Compound no.21, Table I). Oil.

N.m.r.($CDCl_3$)δ: 1.24 (s,6H); 1.9 ( ,1H); 2.15 (t,3H); 5.0 (s,2H); 6.9 (d,1H); 7.15 (d,2H); 7.42 (d,2H).

Infra red (liquid film): 1725 $cm^{-1}$

2-Bromobenzyl (±)-cis-3-(Z-2-chloro-3,3,3-trifluoroprop-1-en-1-yl)-2,2-dimethylcyclopropane carboxylate (Compound no.35, Table I). Oil.

N.m.r.($CDCl_3$)δ : 1.30 (s,6H); 2.0-2.30 (m,2H); 5.22 (s,2H); 6.88-7.66 (m,5H).

Infra red (liquid film): 1720 $cm^{-1}$

2,6-Dibromobenzyl (±)-cis-3-(Z-2-chloro-3,3,3-trifluoroprop-1-en-1-yl)-2,2-dimethylcyclopropane carboxylate (Compound no.41, Table I).

N.m.r.($CDCl_3$)δ: 1.30 (s,3H); 1.34 (s,3H); 1.96-2.38 (m,2H); 5.46 (q,2H); 6.95 (d,1H); 7.09 (t,1H); 7.59 (d,2H).
Infra red (liquid film): 1720 $cm^{-1}$

2,4,6-Trichlorobenzyl 3-(2-chloro-3,3,3-trifluoroprop-1-en-1-yl)-2,2-dimethylcyclopropane carboxylate (Compound no.59, Table I). Oil.

N.m.r.($CDCl_3$)δ: 1.35 (s,6H); 2.00-2.35 (m,2H); 5.35 (d,2H); 6.9 (d,1H); 7.4 (s,2H).
Infra red (liquid film): 1720 $cm^{-1}$

3,5-Dichlorobenzyl (±)-cis-3-)Z-2-chloro-3,3,3-trifluoroprop-1-en-1-yl)-2,2-dimethylcyclopropane carboxylate (Compound no.48, Table I). Oil.

N.m.r.($CDCl_3$)δ: 1.39 (s,6H); 2.08-2.50 (m,2H); 5.28 (s,2H); 7.25 (d,1H); 7.5-7.7 (m,3H) ppm
Infra red (liquid film): 3060, 1730, 1650, 1595, 1570, 1140 $cm^{-1}$

3,4-Dichlorobenzyl (±)-cis-3-(Z-2-chloro-3,3,3-trifluoroprop-1-en-1-yl)-2,2-dimethylcyclopropane carboxylate (Compound no.34, Table I). Oil.

N.m.r.($CDCl_3$)δ: 1.30 (s,6H); 2.00-2.30 (m,2H); 5.08 (s,2H); 6.95 (d,1H); 7.10-7.50 (m,3H) ppm
Infra red (liquid film): 3060, 1720, 1650, 1590, 1560, 1130 $cm^{-1}$

2,5-Dichlorobenzyl (±)-cis-3-(Z-2-chloro-3,3,3-trifluoroprop-1-en-1-yl)-2,2-dimethylcyclopropane carboxylate

0073566

(Compound no.33, Table I). Oil.

N.m.r.($CDCl_3$)$\delta$ : 1.30 (s,3H); 1.32 (s,3H); 2.04-2.36 (m,2H); 5.20 (s,2H); 6.96 (d,1H); 7.20-7.48 (m,3H) ppm

Infra red (liquid film): 1720 $cm^{-1}$

2-Chlorobenzyl ($\pm$)-cis-3-(Z-2-chloro-3,3,3-trifluoroprop-1-en-1-yl)-2,2-dimethylcyclopropane carboxylate (Compound no.31, Table I). Oil.

N.m.r.($CDCl_3$)$\delta$: 1.30 (s,6H); 1.98-2.28 (m,2H); 5.22 (s,2H); 6.92 (d,1H); 7.14-7.50 (m,4H) ppm

Infra red (liquid film): 1718 $cm^{-1}$

2,4-Dichlorobenzyl ($\pm$)-cis-3-(Z-2-chloro-3,3,3-trifluoroprop-1-en-1-yl)-2,2-dimethylcyclopropane carboxylate (Compound no.42, Table I). Oil.

N.m.r.($CDCl_3$)$\delta$: 1.30 (s,6H); 2.00-2.30 (m,2H); 5.20 (s,2H); 6.89-7.00 (d,1H); 7.20-7.50 (m,3H) ppm

Infra red (liquid film): 3060, 1720, 1650, 1580, 1555, 1120 $cm^{-1}$

4-Chlorobenzyl ($\pm$)-cis-3-(2-chloro-3,3,3-trifluoroprop-1-en-1-yl)-2,2-dimethylcyclopropane carboxylate (Compound no.63, Table I). Oil, b.p. 165°C at 0.07 m bar.

N.m.r.($CDCl_3$)$\delta$: 1.3 (s,6H); 2.02 (d,1H); 2.2 (t,1H); 5.08 (s,2H); 7.0 (d,1H); 7.3 (s,4H) ppm

Infra red (liquid film) : 1725 $cm^{-1}$

Benzyl ($\pm$)-cis-3-(2-chloro-3,3,3-trifluoroprop-1-en-1-yl)-2,2-dimethylcyclopropane carboxylate (Compound no.4, Table I).

0073566

4-Methylbenzyl (±)-cis-3-(2-chloro-3,3,3-trifluoroprop-1-en-1-yl)-2,2-dimethylcyclopropane carboxylate (Compound no.2, Table I).

N.m.r.($CDCl_3$) $\delta$ : 1.26 (s,6H); 1.94-2.28 (m,2H); 3.32 (s,3H); 5.00 (s,2H); 6.86 (d,1H); 7.12 (m,4H).

Infra red (liquid film): 2950, 1720, 1650, 1515, 1135, 955 $cm^{-1}$

2,5-Dimethylbenzyl (±)-cis-3-(Z-2-chloro-3,3,3-trifluoroprop-1-en-1-yl)-2,2-dimethylcyclopropane carboxylate (Compound no.50, Table I). Oil.

N.m.r.($CDCl_3$) $\delta$ : 1.28 (s,6H); 1.95-2.24 (m,2H); 2.3 (s,6H); 5.1 (s,2H); 7.1 (m,4H).

Infra red (liquid film): 1720 $cm^{-1}$

3,4-Dimethylbenzyl (±)-cis-3-(Z-2-chloro-3,3,3-trifluoroprop-1-en-1-yl)-2,2-dimethylcyclopropane carboxylate (Compound no.51, Table I). Oil.

N.m.r.($CDCl_3$) $\delta$ : 1,28 (s,6H); 1.96-2.26 (m,2H); 2.30 (s,6H); 5.10 (s,2H); 7.00 (d,1H); 7.18 (s,3H)

Infra red (liquid film): 1720 $cm^{-1}$

3,5-Dimethylbenzyl (±)-cis-3-(Z-2-chloro-3,3,3-trifluoroprop-1-en-1-yl)-2,2-dimethylcyclopropane carboxylate (Compound no.52, Table I). Oil.

N.m.r.($CDCl_3$) $\delta$ : 1.3 (s,6H); 2.0 (m,2H); 2.8 (s,6H); 5.1 (s,2H); 7.1 (m,4H)

Infra red (liquid film): 1720 $cm^{-1}$

4-Methoxybenzyl (±)-cis-3-(2-chloro-3,3,3-trifluoroprop-1-en-1-yl)-2,2-dimethylcyclopropane carboxylate (compound no.1, Table I)

N.m.r.($CDCl_3$)δ: 1.26 (s,6H); 1.94-2.26 (m,2H); 3.74 (s,3H); 5.00 (s,2H); 6.86 (d,1H); 7.00 (q,4H) ppm

Infra red (liquid film): 2950, 1720, 1615, 1515, 1135, 820 $cm^{-1}$

4-Allyloxybenzyl (±)-cis-3-(Z-2-chloro-3,3,3-trifluoroprop-1-en-1-yl)-2,2-dimethylcyclopropane carboxylate (compound no.6, Table I).

N.m.r.($CDCl_3$)δ : 1.3 (s,6H); 2.0 (d,1H); 2.16 (t,1H); 4.54 (m,2H); 5.05 (s,2H); 5.2-5.5 (m,2H) 6.0 (m,1H); 6.9 (d,2H); 7.0 (d,1H); 7.3 (d,2H) ppm

Infra red (liquid film) : 1725, 1610 $cm^{-1}$

3-Allyloxybenzyl (±)-cis-3-(Z-2-chloro-3,3,3-trifluoroprop-1-en-1-yl)-2,2-dimethylcyclopropane carboxylate (compound no.7, Table I)

N.m.r.($CDCl_3$)δ : 1.3 (s,6H); 2.04 (d,1H); 2.19 (t,1H); 4.55 (m,2H); 5.1 (s,2H); 5.2-5.5 (m,2H); 6.0 (m,1H); 6.8-7.05 (m,4H); 7.3 (m,1H) ppm

Infra red (liquid film): 1725, 1610 $cm^{-1}$

3-Methoxybenzyl (±)-cis-3-(Z-2-chloro-3,3,3-trifluoroprop-1-en-1-yl)-2,2-dimethylcyclopropane carboxylate (compound no.14, Table I). Oil.

N.m.r.($CDCl_3$)δ : 1.32 (s,6H); 1.98-2.28 (m,2H); 3.82 (s,3H); 5.12 (s,2H); 6.82-7.08 (m,4H); 7.20-7.40 (m,1H) ppm

Infra red (liquid film): 1715 $cm^{-1}$

2-Chloro-6-methoxybenzyl (±)-cis-3-(Z-2-chloro-3,3,3-trifluoroprop-1-en-1-yl)-2,2-dimethylcyclopropane carboxylate (compound no.17, Table I), m.p. 59-61°C.

N.m.r.($CDCl_3$) $\delta$ : 1.28, 1.32 (d,6H); 1.90-2.30 (m,2H); 3.88 (s,3H); 5.38 (s,2H); 6.80-7.40 (m,4H) ppm

Infra red (liquid paraffin): 3060, 1700, 1650, 1590, 1570, 1140 $cm^{-1}$

4-Allylbenzyl (±)-cis-3-(2-chloro-3,3,3-trifluoroprop-1-en-1-yl)-2,2-dimethylcyclopropane carboxylate (compound no.5, Table I).

N.m.r.($CDCl_3$) $\delta$ : 1.30 (m,6H); 2.04 (d,1H); 2.20 (t,1H); 3.44 (d,2H); 5.00-5.30 (m,4H); 6.0 (m,1H) 7.0 (d,1H); 7.2-7.5 (m,4H) ppm

Infra red (liquid film): 1730, 1650 $cm^{-1}$

4-Allyl-2-methylbenzyl (±)-cis-(Z-2-chloro-3,3,3-trifluoroprop-1-en-1-yl)-2,2-dimethylcyclopropane carboxylate (compound no.54, Table I). Oil.

N.m.r.($CDCl_3$) $\delta$ : 1.26 (s,6H); 2.10 (m,2H); 2.28 (s,3H) 3.28 (d,2H); 4.95 (dd,2H); 5.00 (s,2H); 5.8 (m,1H); 6.8 (d,1H); 6.9-7.2 (m,3H) ppm

Infra red (liquid film) : 1730, 1280, 1200, 1150 $cm^{-1}$

4-Allyl-2-methylbenzyl (±)-cis-3-(Z-2,3,3,3- tetrafluoroprop-1-en-1-yl)-2,2-dimethylcyclopropane carboxylate (compound no.55, Table I). Oil.

N.m.r.($CDCl_3$) $\delta$ : 1.22 (d,6H); 2.0 (m,2H); 2.24 (s,3H); 3.24 (d,2H); 4.9 (dd,2H); 5.0 (s,2H); 5.8 (m,1H); 6.0 (dd,1H); 6.9-7.2 (m,3H) ppm

Infra red (liquid film): 1730, 1640, 1620, 1370, 1210, 1150 $cm^{-1}$

2-Methoxybenzyl (±)-cis-3-(Z-2-chloro-3,3,3-trifluoroprop-1-en-1-yl)-2,2-dimethylcyclopropane carboxylate (compound no.8, Table I). Oil.

N.m.r.($CDCl_3$) $\delta$ : 1.30 (s,3H); 1.32 (s,3H); 2.00-2.28 (m,2H); 3.95 (s,3H); 5.20 (s,2H); 6.80-7.04 (m,3H); 7.20-7.44 (m,2H) ppm

Infra red (liquid film): 1725 $cm^{-1}$

4-Methoxy-2-methylbenzyl 3-(2-chloro-3,3,3-trifluoroprop-1-en-1-yl)-2,2-dimethylcyclopropane carboxylate (compound no.53, Table I). Oil.

N.m.r.($CDCl_3$) $\delta$ : 1.2 (2s,6H); 1.95 (d,1H); 2.1 (t,1H); 2.25 (s,3H); 3.7 (s,3H); 5.04 (s,2H); 6.65 (m,2H); 7.0 (d,1H); 7.15 (d,1H) ppm

Infra red (liquid film): 1730, 1615, 1140 $cm^{-1}$

4-Allyl-2,6-dimethylbenzyl (±)-cis-3-(Z-2-chloro-3,3,3-trifluoroprop-1-en-1-yl)-2,2-dimethylcyclopropane carboxylate (compound no.56, Table I). Colourless oil.

N.m.r.($CDCl_3$) $\delta$ : 1.24 (d,6H); 1.82-2.24 (m,2H); 2.28 (s,6H); 3.24 (d,2H); 4.82-5.26 (m,4H); 5.55-6.10 (m,1H); 6.60-6.95 (m,3H) ppm

Infra red (liquid film) : 1730 $cm^{-1}$

2,6-Diethylbenzyl 3-(2-chloro-3,3,3-trifluoroprop-1-en-1-yl)-2,2-dimethylcyclopropane carboxylate (compound no.57, Table I). Oil.

N.m.r.($CDCl_3$) $\delta$ : 1.3 (m,12H); 2.0 (m,2H); 2.70 (q,4H); 5.21 (d,2H); 7.18 (m,4H) ppm

Infra red (liquid film) : 1720 $cm^{-1}$

2-Ethylbenzyl (±)-cis-(Z-2-chloro-3,3,3-trifluoroprop-1-en-1-yl)-2,2-dimethylcyclopropane carboxylate (Compound no.49, Table I). Oil.

N.m.r.($CDCl_3$) $\delta$ : 1.30 (m,9H); 2.10 (m,2H); 2,70 (q,2H) 5.18 (s,2H); 7.0 (d,2H); 7.3 (s,4H) ppm
Infra red (liquid film) : 1720 $cm^{-1}$

4-Bromo-2-methylbenzyl (±)-cis-3-(Z-2-chloro-3,3,3-trifluoroprop-1-en-1-yl)-2,2-dimethylcyclopropane carboxylate (compound no.58, Table I). Oil.

N.m.r.($CDCl_3$) $\delta$ : 1.28 (s,6H); 2.10 (m,2H); 2.30 (s,3H); 5.08 (s,2H); 6.95 (d,1H); 7.25 (m,3H) ppm
Infra red (liquid film): 1720, 1640, 1590, 1290, 1270, 1130 $cm^{-1}$

4-Chloro-2-methylbenzyl (±)-cis-3-(Z-2-chloro-3,3,3-trifluoroprop-1-en-1-yl)-2,2-dimethylcyclopropane carboxylate (Compound no.19, Table I). Oil.

N.m.r.($CDCl_3$) $\delta$ : 1.30 (s,6H); 1.95-2.30 (m,2H); 2.32 (s,3H); 5.08 (s,2H); 6.95 (d,1H); 7.08-7.30 (m,3H) ppm
Infra red (liquid film): 1720 $cm^{-1}$

2-Chloro-6-methylbenzyl (±)-cis-3-(Z-2-chloro-3,3,3-trifluoroprop-1-en-1-yl)-2,2-dimethylcyclopropane carboxylate (compound no.18, Table I).

N.m.r.($CDCl_3$) $\delta$ : 1.20 (s,6H); 1.84-2.20 (m,2H); 2.30 (s,3H); 5.24 (s,2H); 6.88 (d,1H); 7.00-7.25 (m,3H) ppm
Infra red (liquid film): 3060, 1720, 1650, 1590, 1570, 1120 $cm^{-1}$

EXAMPLE 3

This Example illustrates the insecticidal properties of the compounds of formula I against the larval stage of the rootworm Diabrotica balteata. The compound under test was dissolved in acetone and the solution diluted with acetone until the required concentration (500, 100, 12 or 10 ppm) was obtained. 1.0 ml of the solution thus obtained is applied to a filter paper (9 cm diameter) which is air dried to allow the solvent to evaporate and then placed in a petri dish. 1.0 ml of water is added and 10 early second instar larval Diabrotica balteata are placed on the filter paper together with a germinating maize seed. A lid is placed on the dish which is stored at 25°C and 60% relative humidity for 72 hours after which time the mortality of the larvae is assessed.

The results of the tests are given in Table II for each of the compounds tested at the rate in parts per million given as a grading of mortality on a scale of 0-9 wherein :

| | | | | |
|---|---|---|---|---|
| 0 | represents | less than | 10% | mortality |
| 1 | " | from | 10 to 19% | " |
| 2 | " | " | 20 to 29% | " |
| 3 | " | " | 30 to 39% | " |
| 4 | " | " | 40 to 49% | " |
| 5 | " | " | 50 to 59% | " |
| 6 | " | " | 60 to 69% | " |
| 7 | " | " | 70 to 79% | " |
| 8 | " | " | 80 to 89% | " |
| 9 | " | " | 90 to 100% | " |

TABLE II

| COMPOUND NO | Mortality Grading 100 ppm (*500 ppm) | Mortality Grading 10 ppm (*12 ppm) | COMPOUND NO | Mortality Grading 100 ppm (*500 ppm) | Mortality Grading 10 ppm (*12 ppm) |
|---|---|---|---|---|---|
| 1 | 9 | 2* | 24 | 9 | 9 |
| 2 | 9 | 9* | 25 | 9 | 9 |
| 3 | 9 | 9* | 26 | 9 | 9 |
| 4 | 9 | 9* | 27 | 9 | 9 |
| 5 | 9 | 9* | 28 | 9 | 1 |
| 6 | 9* | 3* | 30 | 9 | 9* |
| 7 | 9 | 3* | 31 | 9 | 9* |
| 8 | 9 | 9 | 32 | 9 | 9* |
| 9 | 9 | 9 | 33 | 9 | 9* |
| 10 | 9 | 9 | 34 | 9 | 8* |
| 11 | 9 | 2 | 35 | 9* | - |
| 12 | 9 | 9 | 36 | 9 | 9* |
| 13 | 9 | 9 | 39 | 9 | 9* |
| 14 | 9 | 9 | 40 | 9 | 9* |
| 15 | 9 | 9 | 41 | 9 | 9* |
| 16 | 9 | 9 | 42 | 9 | 9 |
| 17 | 9 | 9 | 43 | 9 | 9 |
| 18 | 9 | 9 | 44 | 9 | 8 |
| 19 | 9 | 9 | 45 | 9 | 2 |
| 20 | 9 | 9* | 46 | 9 | 1 |
| 21 | 9 | 9* | 47 | - | 7 |
| 22 | 9 | 9 | 48 | 9 | 4 |
| 23 | 9 | 9 | | | |

EXAMPLE 4

This Example illustrates the preparation of a granular formulation according to the invention.

A solution of 2,6-dimethylbenzyl cis-3-(Z-2-chloro-3,3,3-trifluoroprop-1-en-1-yl)-2,2-dimethylcyclopropane carboxylate (20g) and wood rosin (50g) in methylene chloride (200 ml) is sprayed onto gypsum granules (1930g, 30-50 mesh, sold under the registered trade mark "Agsorb-S" 2100G) in a rotating drum mixer, and thereafter the treated granules are air dried to remove the solvent to provide a granular composition containing 1% by weight of the above ingredient.

NDB/jw
SPEC 275
5 July 1982

1. A method of combating insect pests at a stage when they inhabit the soil which consists of applying to the soil an insecticidally effective amount of a composition comprising as an active ingredient a compound of formula :

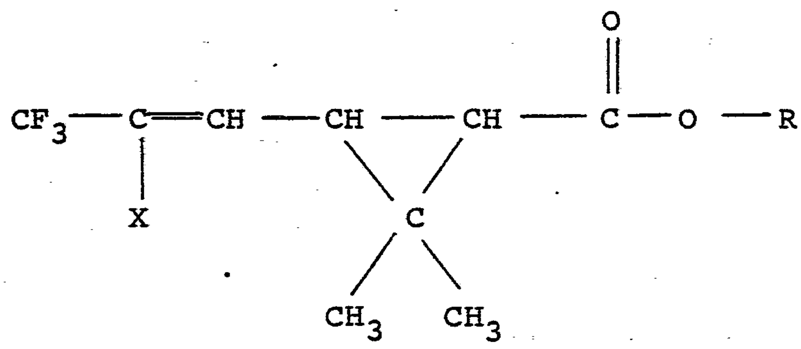

wherein R is a benzyl group optionally substituted in the phenyl ring with up to three substituents each of which may be selected from chloro, bromo, iodo, alkyl of up to four carbon atoms, alkenyl of up to six carbon atoms and alkoxy of up to four carbon atoms, and X is chloro or fluoro.

2. The method according to claim 1 wherein R is selected from benzyl, methoxybenzyl, methylbenzyl, dimethylbenzyl, trimethylbenzyl, ethylbenzyl, diethylbenzyl, allylbenzyl, allyloxybenzyl, allylmethylbenzyl, allyldimethylbenzyl, methylmethoxybenzyl, methylbromobenzyl, methylchlorobenzyl, methoxychlorobenzyl, bromobenzyl, dibromobenzyl, chlorobenzyl, dichlorobenzyl, trichlorobenzyl, iodobenzyl, chloroiodobenzyl.

3. The method according to claim 1 wherein X is fluoro and R is 2-methylbenzyl or 2,6-dimethylbenzyl.

4. The method according to claim 1 wherein X is chloro and R is 2,6-dimethylbenzyl.

5. The method according to claim 1 wherein the composition consists of granules containing from 0.5 to 2.5% by weight of the active ingredient, said granules being applied to the soil at a rate of 5 to 25 kg/ha.

6. The method according to claim 1 wherein the pests to be combated are larval coleopterous or lepidopterous pests.

7. The method according to claim 6 wherein the pests are root worms of the genus Diabrotica.

8. A granular composition for use in the method of claim 1 comprising an inert granular carrier selected from mineral granules and granules of vegetable origin supporting an insecticidally effective amount of an active ingredient as defined in claim 1, wherein said composition contains from 0.25 to 5.0% by weight of the active ingredient.

9. A granular composition according to claim 8 wherein the granular carrier is selected from gypsum and pumice and wherein the composition contains from 0.5 to 2.5% by weight of the active ingredient.

10. A granular composition according to claim 8 additionally incorporating a resin or coated with polymeric substance.

0073566

Application number

European Patent Office

# EUROPEAN SEARCH REPORT

EP 82 30 3805

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,X | EP-A-0 003 336 (FMC CORPORATION) *Page 16, lines 10-37; page 28, compounds 6.43 and 6.44; page 29, compound 6.51; claims 1,2,4,5,7-12* | 1,2,5 | A 01 N 53/00<br>A 01 N 25/12<br>A 01 N 25/26<br>C 07 C 69/743 |
| A | EP-A-0 010 879 (ICI) *Table I, compounds 12-18; page 15, lines 1-6; page 17, lines 1-25; claims 1,4,11,14,15* & GB - A - 2 034 700 (Cat. D) | 1,6-9 | |
| A | EP-A-0 031 199 (ICI) *Page 22, line 22 to page 23, line 11, page 25, lines 1-25; claims 1,2,8-11* | 1,5-10 | |
| A | EP-A-0 008 340 (BAYER) *Page 24, lines 18-26; page 26, lines 1-26; page 28, lines 13-19; page 28, lines 27-30; page 29, lines 2-5; examples 5-7,9,10; claims 1,9* | 1,5-10 | TECHNICAL FIELDS SEARCHED (Int. Cl. 3)<br>A 01 N |

The present search report has been drawn up for all claims

| Place of search | Date of completion of the search | Examiner |
|---|---|---|
| THE HAGUE | 08-12-1982 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82